# EUROPEAN PATENT SPECIFICATION

(11) **EP 3 243 952 B1**
(45) Date of publication and mention of the grant of the patent: **24.04.2019**
(21) Application number: 17174852.8
(22) Date of filing: 12.01.2012
(51) Int. Cl.: D06F 39/02, A47L 15/44

(54) **WASHING MACHINE**
WASCHMASCHINE
MACHINE À LAVER

(30) Priority: 17.01.2011 KR 20110004383
(43) Date of publication of application: 15.11.2017
(62) Divisional of application: 12150853.5
(73) Proprietor: Samsung Electronics Co., Ltd., Suwon-si, Gyeonggi-do 443-742 (KR)
(72) Inventor: SONG, Weon Jin, Gyeonggi-do (KR); LEE, Song Yik, Gyeonggi-do (KR); SONG, Hyun Woo, Gyeonggi-do (KR)
(74) Representative: Grünecker Patent- und Rechtsanwälte PartG mbB

(56) References cited:
- EP-A1- 2 003 237
- EP-A1- 2 251 480
- EP-A2- 1 884 584
- WO-A1-2009/142355
- US-A1- 2003 145 633
- US-A1- 2008 235 880
- US-A1- 2010 000 264
- US-A1- 2010 000 586
- US-A1- 2011 186 098

## Description

### BACKGROUND

### 1. Field

Embodiments relate to a washing machine with a detergent supply device which automatically supplies a liquid detergent.

### 2. Description of the Related Art

In general, a washing machine is an apparatus which includes a tub containing water and a drum rotatably installed within the tub, and washes laundry by rotating the drum in which the laundry is placed within the tub.

Such a washing machine further includes a detergent supply device to supply a detergent used for washing to the tub. Recently, a washing machine to which a detergent supply device to use a liquid detergent easily dissolving in water as compared with a powdery detergent has been developed.

An example of a washing machine having a liquid detergent dispenser is disclosed in WO 2009/142355 A1.

Further, washing machines having automatic dosing systems for liquid detergents are disclosed, for example, in US 2011/0186098 A1, EP 2 251 480 A1, EP 1 884 584 A2 and US 2008/0235880 A1. Still further, US 2003/0145633 A1 and EP 2 003 237 A1 disclose washing machines in which detergents can be supplied manually or automatically. US 2010/0000264 A1 discloses a method for converting a household cleaning appliance with a non-bulk dispensing system to a household cleaning appliance with a bulk dispensing system.

### SUMMARY

Therefore, it is an aspect of one or more embodiments to provide a washing machine with a detergent supply device which supplies detergents through an automatic detergent supply method and a manual detergent supply method.

It is another aspect of one or more embodiments to provide a washing machine with a detergent supply device which prevents malfunction of valves generated when a liquid detergent remaining on the valves is dried and solidified.

Additional aspects of one or more embodiments will be set forth in part in the description which follows and, in part, will be apparent from the description, or may be learned by practice.

In accordance with an aspect of one or more embodiments, a washing machine includes a main body, a tub disposed within the main body to contain water, a drum rotatably installed within the tub, and a detergent supply device to supply detergents together with water to the tub, wherein the detergent supply device includes a detergent housing installed within the main body and a detergent accommodation box movably installed within the detergent housing, and the detergent accommodation box is divided into automatic detergent accommodation parts to accommodate a detergent to be supplied automatically and manual detergent accommodation parts to accommodate a detergent to be supplied manually, and the detergent supply device supplies the detergents through an automatic detergent supply method and a manual detergent supply method.

The automatic detergent accommodation parts accommodate a liquid detergent and include detergent discharge parts provided with detergent discharge holes to discharge the detergent, and the detergent supply device further includes valve units disposed at the detergent discharge parts to selectvely discharge the liquid main detergent through the detergent discharge holes and valve drive devices to operate the valve units.

The automatic detergent accommodation parts may include a main detergent accommodation part to accommodate a liquid main detergent and a rinse accommodation part to accommodate a fabric rinse.

Each of the valve drive devices may include a cam having a fan-shaped cross section and rotated to operate each of the valve units and a detergent supply motor to rotate the cam.

Each of the valve units may include a valve ascending and descending according to rotation of the cam, an ascending/descending guide supporting the valve to ascend and descend the valve, and a valve cap installed at each of the detergent discharge parts to install the ascending/descending guide on each of the detergent discharge parts.

The ascending/descending guide may include a guide hole in which the valve is installed to be capable of ascending and descending, a first valve hole provided adjacent to the guide hole and opened and closed by the valve, and a temporary storage space installed within the ascending/descending guide to temporarily accommodate the liquid detergent, the valve cap may include a second valve hole to discharge the detergent within the temporary storage space to the inside of the detergent housing, and the valve may include a valve shaft installed within the guide hole to be capable of ascending and descending, a first valve part disposed above the value shaft to open and close the first valve hole according to ascending and descending of the valve, and a second valve part disposed under the valve shaft to open and close the second valve hole.

Each of the valve units may include an elastic member provided with one end supported by the ascending/descending guide and the other end supported by the second valve part, and elastically supporting the valve in the downward direction.

The ascending/descending guide may include a support rib extended in the radial direction and inserted into a gap between the lower end of each of the detergent discharge parts and the valve cap.

The cam may support the lower surface of the second valve part and rotated to ascend and descend the valve.

The detergent supply device may further include an automatic water supply guide to guide water to the lower portions of the valve units, and spray holes to spray water toward the lower portions of the valve units and the cams may be provided at the front end of the automatic water supply guide disposed below the valve units.

The detergent supply device may further include an accommodation part cover covering the main detergent accommodation part and the rinse accommodation part and provided with a main detergent inlet and a rinse inlet formed at the front end thereof so that the main detergent and the fabric rinse are put into the main detergent accommodation part and the rinse accommodation part through the main detergent inlet and the rinse inlet, and a rotating cover rotatably installed on the accommodation part cover and rotated to open and close the main detergent inlet and the rinse inlet.

The accommodation part cover and the rotating cover may be made of a transparent material.

The detergent accommodation box may include a front cover forming the front surface thereof, and a tray installed at the rear of the front cover and provided with the main detergent accommodation part and the rinse accommodation part, the front cover may include display windows enabling a user to observe the heights of the main detergent and the fabric rinse accommodated in the main detergent accommodation part and the rinse accommodation part, and the tray may include transmission parts provided at positions corresponding to the display windows, and detergent guide grooves provided on the lower surfaces of the main detergent accommodation part and the rinse accommodation part, provided with lower surfaces extended to have heights corresponding to the lowest portions of the lower surfaces of the main detergent accommodation part and the rinse accommodation part, and connected to the lower portions of the transmission parts.

The tray may be formed of a transparent material.

The manual detergent accommodation parts may include a powdery detergent accommodation part to accommodate a powdery detergent and a bleach accommodation part to accommodate a bleach.

The detergent supply device may include a housing cover installed to cover the upper surface of the detergent housing and a manual water supply guide fixed to the lower surface of the housing cover to supply water to the manual detergent accommodation parts, and the inside of the manual detergent accommodation parts may be divided into a powdery detergent water supply channel to supply water to the powdery detergent accommodation part and a bleach water supply channel to supply water to the bleach accommodation part.

The detergent supply device may further include an accommodation part cover covering the automatic detergent accommodation parts, the accommodation cover may include a powdery detergent inlet to inject the powdery detergent into the powdery detergent accommodation part therethrough and a bleach inlet to inject the bleach into the bleach accommodation part therethrough, and water supply holes may be provided on the lower surfaces of the powdery detergent water supply channel and the bleach water supply channel at positions corresponding to the powdery detergent inlet and the bleach inlet.

The accommodation part cover may further include an inclined guide which is downward inclined toward the bleach inlet and formed adjacent to the bleach inlet.

The washing machine may further include a manual supply selection button to select one of the detergent supply methods.

The washing machine may further include an additional detergent button to additionally inject the detergent.

In accordance with another aspect of one or more embodiments, a washing machine includes a main body, a tub disposed within the main body to contain water, a drum rotatably installed within the tub, and a detergent supply device to supply detergents together with water to the tub, wherein the detergent supply device includes a detergent housing installed within the main body, a detergent accommodation box accommodating an amount of a liquid detergent required to execute washing plural times and provided with detergent discharge holes to discharge the detergent, valve units disposed at the detergent discharge holes to restrictedly discharge a portion of the liquid detergent accommodated in the detergent accommodation box through the detergent discharge holes, and valve drive devices to operate the valve units.

### BRIEF DESCRIPTION OF THE DRAWINGS

These and/or other aspects of one or more embodiments will become apparent and more readily appreciated from the following description of embodiments, taken in conjunction with the accompanying drawings of which:
FIG. 1 is a schematic view of a washing machine in accordance with an embodiment;
FIG. 2 is an exploded perspective view illustrating an installed state of a detergent supply device applied to the washing machine in accordance with an embodiment;
FIG. 3 is an enlarged view of the portion 'A' of FIG. 2;
FIG. 4 is an exploded perspective view illustrating a detergent accommodation box and an accommodation part cover applied to the washing machine in accordance with an embodiment;
FIG. 5 is a plain view of the detergent accommodation box applied to the washing machine in accordance with an embodiment;
FIG. 6 is an exploded perspective view illustrating a detergent housing and a housing cover applied to the washing machine in accordance with an embodiment;
FIG. 7 is a perspective view illustrating a valve unit and a valve drive device applied to the washing machine in accordance with an embodiment;
FIG. 8 is an exploded perspective view illustrating the valve unit and the valve drive device applied to the washing machine in accordance with an embodiment;
FIGS. 9 to 11 are sectional views illustrating operation of the valve unit and the valve drive device applied to the washing machine in accordance with an embodiment;
FIG. 12 is an exploded perspective view of a detergent supply device applied to a washing machine in accordance with another embodiment; and
FIG. 13 is a schematic view of a washing machine in accordance with another embodiment.

### DETAILED DESCRIPTION

Reference will now be made in detail to embodiments, examples of which are illustrated in the accompanying drawings, wherein like reference numerals refer to like elements throughout.

Hereinafter, a washing machine in accordance with an embodiment will be described with reference to the accompanying drawings.

In an embodiment, a drum washing which washes laundry using a difference in elevation will be exemplarily described.

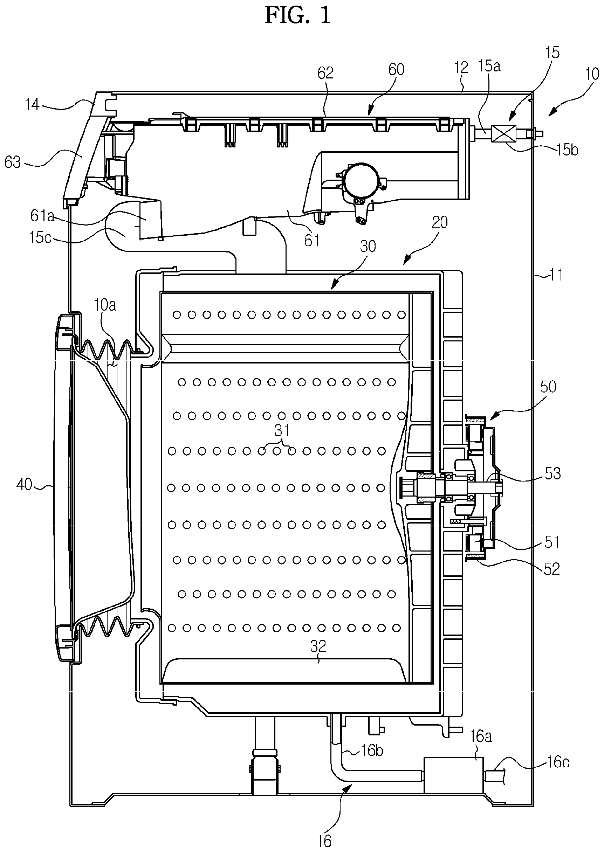

As shown in FIG. 1, the washing machine in accordance with an includes a main body 10 forming the external appearance of the washing machine, a tub 20 suspended within the main body 10 to contain water, a drum 30 rotatably installed within the tub 20, a door 40 to open and close a laundry inlet 10a provided to put laundry into the drum 30 therethrough, and a drum drive motor 50 installed on the rear surface of the tub 20 and generating rotary force to rotate the drum 30.

Therefore, the laundry within the drum 30 is raised upward and then fallen downward and is thus washed using a difference in elevation by rotating the drum 30 by the drum drive motor 50 under the condition that the laundry is put into the drum 30 through the inlet 30a by opening the door 40.

Communication holes 31 through which water within the tub 20 is introduced into the drum 30 are provided on the drum 30, and lifters 32 to raise the laundry upward are arranged on the inner surface of the drum 30.

The main body 10 includes a main body frame 11 forming front, rear and both side surfaces of the main body 10, a cover frame 12 covering the upper portion of the main body frame 11, and a support bar 13 provided with one end fixed to the upper end of the front surface of the main body frame 11 and the other end fixed to the upper end of the rear surface of the main body frame 11 to support the lower surface of the cover frame 12. Further, a control panel 14 enabling a user to select operation of the washing machine is arranged at the upper portion of the front surface of the main body 10.

A water supply device 15 to supply water to the tub 20 and a detergent supply device 60 to mix the water supplied by the water supply device 15 with a detergent and then to supply the water containing the detergent to the tub 20 are disposed at the upper portion of the inside of the main body 10. The water supply device 15 includes water supply pipes 15a connected to an external water supply source, water supply valves 15b to respectively open and close the water supply pipes 15a, and a water supply hose 15c connecting the detergent supply device 60 to the tub 20 to guide the water and the detergent to the tub 20.

A drain device 16 to discharge water used for washing to the outside after washing of the laundry has been completed is disposed under the tub 20. The drain device 16 includes a drain pump 16a to discharge water within the tub 20, a drain pipe 16b connecting the tub 20 and the drain pump 16a to each other, and a drain hose 16c provided within one end connected to the drain pump 16a and the other end extended to the outside of the main body 10.

The drum drive motor 50 includes a stator 51 installed on the tub 20, a rotor 52 rotating while interacting with the stator 51, and a rotary shaft 53 provided with one end installed at the rotor 52 and the other end passing through the rear surface of the tub 20 and installed at the drum 30 to rotate the drum 30 together with the rotor 52.

The detergent supply device 60 may supply detergents through an automatic detergent supply method and a manual detergent supply method according to user's selection, and the automatic detergent supply method is configured to additionally inject a detergent according to user's need.

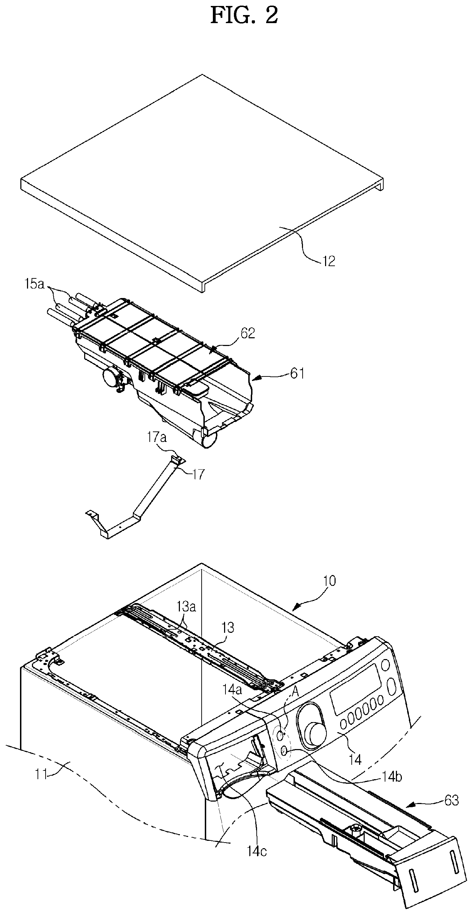

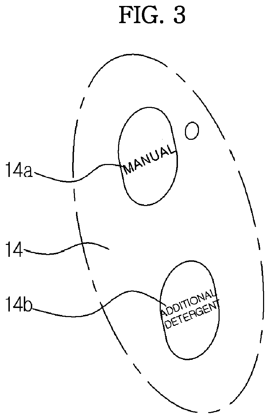

In order to enable a user to select one of the above detergent supply methods and detergent additional injection, as described above, the control panel 14 includes a manual supply selection button 14a to select one of the detergent supply methods and an additional detergent button 14b to additionally inject the detergent, as shown in FIGS. 2 and 3. Therefore, the user may select one of the detergent supply methods through the manual supply selection button 14a and additionally inject the detergent through the additional detergent button 14b.

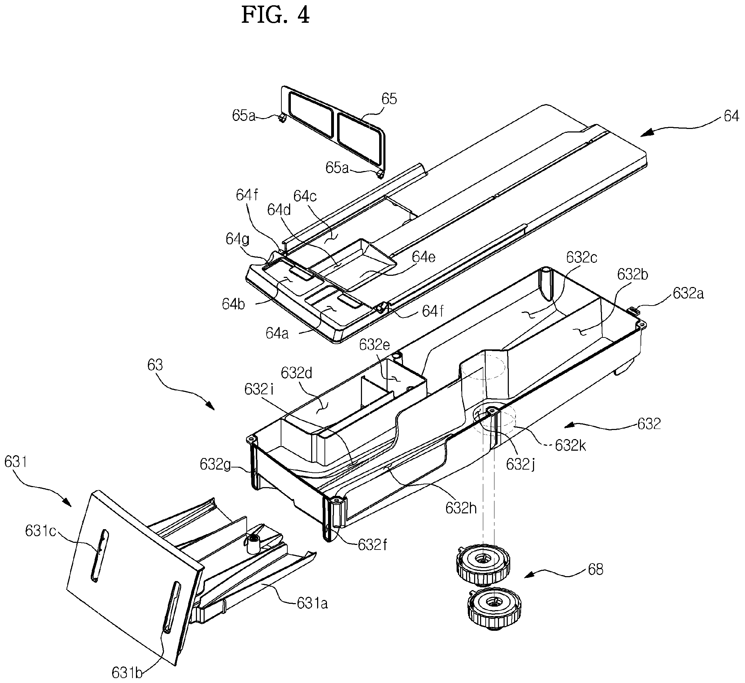

The detergent supply device 60, as shown in FIGS. 4 to 6, includes a detergent housing 61 installed within the main body 10, a housing cover 62 installed to cover the upper portion of the detergent housing 61, a detergent accommodation box 63 movably installed within a space formed by the detergent housing 61 and the housing cover 62 to contain detergents therein, an accommodation part cover 64 covering the detergent accommodation box 63 to prevent the detergents within the detergent accommodation box 63 from overflowing during transfer of the detergent accommodation box 63, and water supply guides 66 and 67 to mix water with the detergents.

The detergent housing 61 is provided with an accommodation space 61a in which the detergent accommodation box 63 is accommodated, and is fixed within the main body 10 such that the front surface and the upper surface of the detergent housing 61 are opened to install the detergent accommodation box 63 and the water supply guides 66 and 67. A connection part 61b connected to the water supply hose 15c to supply the detergent and water to the tub 20 is provided at the lower portion of the front surface of the detergent housing 61. The front end of the detergent housing 61 is fixed to one side of the control panel 14 disposed at the upper portion of the front surface of the main body 10. An opening 14c through which the detergent accommodation box 63 is retracted into and extracted from the detergent housing 61 is provided at one side of the control panel 14.

A sensor 70 to detect whether or not the detergent accommodation box 63 is completely retracted into the detergent housing 61 is disposed at the rear surface of the detergent housing 61, and a sensing part 632a disposed on the sensor 70 when the detergent accommodation box 63 is completely retracted into the detergent housing 61 is formed at the rear end of the detergent accommodation box 63. The sensor 70 may be a magnet sensor which senses a magnetic field, and a magnet is disposed in the sensing part 632.

In order to prevent the rear end of the detergent supply device 60 from sagging due to its own weight, a support member 17 to support the rear end of the detergent housing 61 is installed on the main body 10. The support member 17 is provided with one end installed on the support bar 13 and the other end fixed to the upper end of one side of the main body frame 11, and the middle portion of the support member 17 is bent downward to support the lower surface of the detergent housing 61 so that the lower surface of the rear portion of the detergent housing 61 is supported by the upper surface of the support member 17.

Reinforcing ribs 13a to reinforce the support bar 13 protrude upward from both sides of the support bar 13, and a hanging part 17a bent upward to be hang on the reinforcing rib 13a is provided at one end of the support member 17 installed on the support bar 13. Therefore, the end of the support member 17 is fixed to the support bar 13 through a screw under the condition that the hanging part 17a is hang on the reinforcing rib 13a, and the other end of the support member 17 is fixed to the upper end of the side surface of the main body frame 11 through a screw.

The housing cover 62 is installed to cover the upper portion of the detergent housing 61 through a snap-fit connection method. For this purpose, a plurality of hooks 62a is provided at the edge of the housing cover 62, and a protruding part 61c which protrudes outward is provided along the upper end of the detergent housing 61.

The detergent accommodation box 63 includes a front cover 631 forming a portion of the front surface of the washing machine, and a tray 632 installed at the rear of the front cover 631 to be movable within the accommodation space 61a of the detergent housing 61 and provided with detergent accommodation parts 632b, 632c, 632d and 632e in which detergents to be supplied are respectively stored. The tray 632 is formed of a transparent material to enable a user to easily observe the inside of the tray 632, and the inside of the tray 632 is divided into automatic detergent accommodation parts 632b and 632c in which a detergent to be automatically supplied is accommodated and manual detergent accommodation parts 632d and 632e in which a detergent to be manually supplied is accommodated.

The automatic detergent accommodation parts 632b and 632c include a main detergent accommodation part 632b to automatically supply a liquid main detergent and a rinse accommodation part 632c to automatically supply a liquid fabric rinse, and the manual detergent accommodation parts 632d and 632e include a powdery detergent accommodation part 632d to supply a powdery detergent and a bleach accommodation part 632e to supply a bleach.

Here, a large amount of the main detergent and a large amount of the fabric rinse are injected into the main detergent accommodation part 632b and the rinse accommodation part 632c of the automatic detergent accommodation parts 632b and 632c so as to execute washing plural times, and are partially used whenever washing of the laundry is carried out. When the automatic detergent accommodation parts 632b and 632c are provided, washing of laundry is repeated until the detergent and the fabric rinse accommodated in the main detergent accommodation part 632b and the rinse accommodation part 632c are exhausted without injection of the main detergent or the fabric rinse whenever washing of laundry is carried out, and thus use of the washing machine is convenient.

For this purpose, the main detergent accommodation part 632b accommodates 1.91 of the liquid detergent in the case of a large-size washing machine and accommodates 1.5 liter of the liquid detergent in the case of a medium/small-size washing machine, and the rinse accommodation part 632 accommodates 1.5 liter of the fabric rinse in the case of a large-size washing machine and accommodates 0.5 liter of the fabric rinse in the case of a medium/small-size washing machine.

The front cover 631 includes a bracket part 631a extended rearward from the rear surface thereof. The bracket part 631a is connected to the front portion of the lower surface of the tray 632 and disperses force, applied to the front cover 631 when the detergent accommodation box 63 is extracted or retracted, throughout the tray 632.

Further, display windows 631b and 631c are provided at both sides of the front surface of the front cover 631, thereby enabling the user to check the heights of the main detergent and the fabric rinse respectively accommodated in the main detergent accommodation part 632b and the rinse accommodation part 632c through the display windows 631b and 631c. The two display windows 631b and 631c include a main detergent display window 631b to display the height of the main detergent and a rinse display window 631c to display the height of the fabric rinse.

Transmission parts 632f and 632g extended vertically and connected to the rear portions of the display windows 631b and 631c to display the heights of the main detergent and the rinse contained in the main detergent accommodation part 632b and the rinse accommodation part 632c are provided on the front surface of the tray 632. The tray 632 is formed of a transparent material, and thus the transmission parts 632f and 632g are formed of the transparent material. Therefore, a user located in front of the front cover 631 may observe the heights of the main detergent and the fabric rinse contained in the tray 632 through the display windows 631b and 631c and the transmission parts 632f and 632g.

The lower surface of the front portion of the tray 632 is downward inclined toward detergent discharge parts 632k, which will be described later, to guide the main detergent and the fabric rinse to the detergent discharge parts 632k. That is, a region of the lower surface of the tray 632 located in front of the detergent discharge parts 632k is downward inclined backwardly toward the detergent discharge parts 632k, and a region of the lower surface of the tray 632 located at the rear of the detergent discharge parts 632k is downward inclined forwardly toward the detergent discharge parts 632k. Here, when the region of the lower surface of the tray 632 located in front of the detergent discharge parts 632k is downward inclined backwardly toward the detergent discharge parts 632k, as describe above, movement of water supplied to the detergent housing 61 toward the front cover 631 along the lower surface of the tray 632 is prevented.

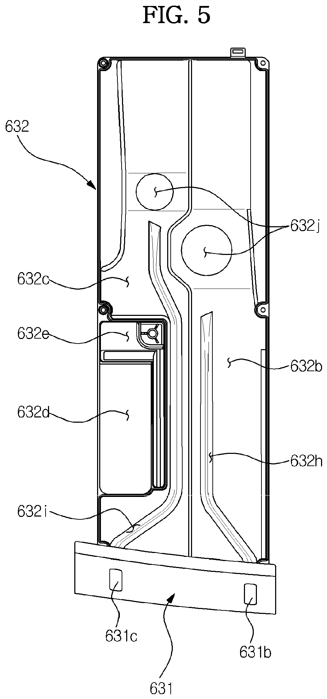

Since the lower surface of the front portion of the tray 632 is downward inclined backwardly toward the detergent discharge parts 632k, as describe above, two detergent guide grooves 632h and 632i respectively connected to the lower portions of the two transmission parts 632f and 632g are provided on the lower surfaces of the main detergent accommodation part 632b and the rinse accommodation part 632c of the tray 632, as shown in FIG. 5. The lower surfaces of the detergent guide grooves 632h and 632i are extended to have heights corresponding to the lowest portions of the inner lower surfaces of the main detergent accommodation part 632b and the rinse accommodation part 632c, thereby enabling the heights of the liquid detergent and the fabric rinse contained in the tray 632 to be precisely displayed through the display windows 631b and 631c.

The accommodation part cover 64 is formed of a transparent material to allow a user to easily observe the detergents contained in the tray 63, and covers the upper portions of the main detergent accommodation part 632b and the rinse accommodation part 632c to accommodate the liquid detergent and the fabric rinse to prevent the liquid main detergent and fabric rinse from being dried. Further, the accommodation part cover 64 serves to prevent the liquid detergent and fabric rinse from overflowing the tray 632 during transfer of the detergent accommodation box 63.

A main detergent inlet 64a and a rinse inlet 64b through which the liquid main detergent and the fabric rinse are injected into the main detergent accommodation part 632b and the rinse accommodation part 632c are provided in parallel at the front end of the accommodation part cover 64, and a rotating cover 65 to open and close the main detergent inlet 64a and the rinse inlet 64b is installed on the accommodation part cover 64. The rotating cover 65 is formed of a transparent material in the same manner as the accommodation part cover 64, and hinge parts 65a provided at both sides of the rotating cover 65 are rotatably connected to hinge protrusions 64f provided at both sides of the accommodation part cover 64 so that the rotating cover 65 is rotated to simultaneously open and close the main detergent inlet 64a and the rinse inlet 64b. A recess 64g to allow a user to easily apply force to the rotating cover 65 to rotate the rotating cover 65 is provided at one side of the rinse inlet 64b of the tray 632.

Further, a powdery detergent inlet 64c through which the powdery detergent is injected into the powdery detergent accommodation part 632d and a bleach inlet 64d through which the bleach is injected into the bleach accommodation part 632e are provided on the accommodation part cover 64 at the rear of the rinse inlet 64b. Since the bleach inlet 64d has a very small width in terms of the arrangement structure of the detergent accommodation parts 632b, 632c, 632d and 632e, an inclined guide 64e which is downward inclined toward the bleach inlet 64d is formed adjacent to the bleach inlet 64d of the accommodation part cover 64.

In order to supply the liquid main detergent and fabric rinse accommodated in the main detergent accommodation part 632b and the rinse accommodation part 632c to the tub 20, the detergent discharge parts 632k extended into a hollow cylindrical shape to form detergent discharge holes 632j are respectively provided on the lower surfaces of the main detergent accommodation part 632b and the rinse accommodation part 632c, and the detergent supply device 60 includes two valve units 68 to selectively discharge the liquid main detergent and fabric rinse through the two detergent discharge holes 632j and two valve drive devices 69 to independently operate the two valve units 68.

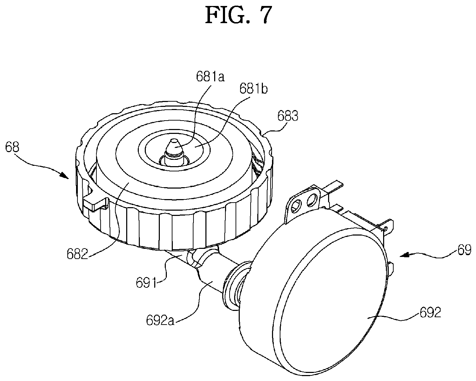

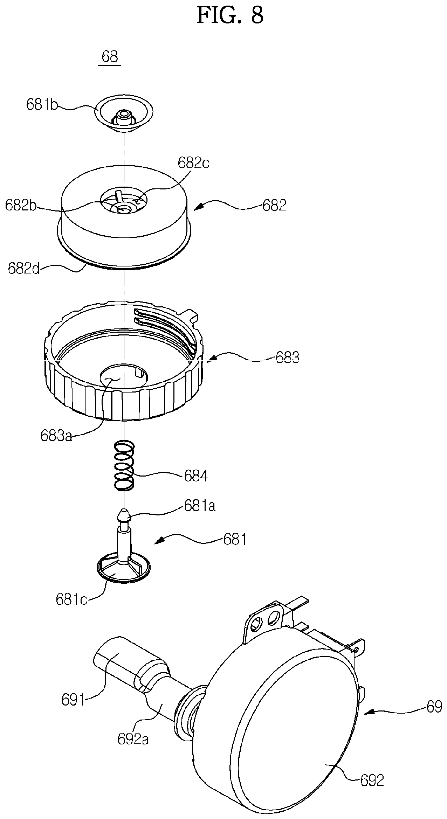

The valve unit 68, as shown FIGS. 7 and 8, includes a valve 681 ascending and descending to open and close the detergent discharge part 632k, an ascending/descending guide 682 to guide ascending and descending of the valve 681, a valve cap 683 to install the ascending/descending guide 682 on the detergent discharge part 632k, and an elastic member 684 to elastically support the valve 681.

The ascending/descending guide 682 is formed in a hollow cylindrical shape and is provided with a temporary storage space 682a to temporarily accommodate the liquid main detergent or fabric rinse, and a guide hole 682b in which the valve 681 is installed to be capable of ascending and descending, and a first valve hole 682c located adjacent to the guide hole 682b to pass the liquid main detergent or fabric rinse. Further, a support rib 682d protruding in the radial direction is provided on the outer circumferential surface of the lower end of the ascending/descending guide 682, and is inserted into a gap between the lower end of the detergent discharge part 632k and the inner surface of the valve cap 683 during a process of coupling the valve cap 683 with the detergent discharge part 632k, thereby maintaining a state in which the ascending/descending guide 682 is installed on the detergent discharge part 632k.

The valve cap 683 includes a second valve hole 683a to discharge the detergent temporarily stored in the temporary storage space 682a of the ascending/descending guide 682 to the inside of the detergent housing 61, and is connected to the detergent discharge part 632k of the tray 632 through a screw connection method.

The valve 681 includes a valve shaft 681a installed within the guide hole 682b to be capable of ascending and descending, a first valve part 681b formed of a elastically deformable material, such as rubber, and disposed above the value shaft 681a to open and close the first valve hole 682c according to ascending and descending of the valve 681, and a second valve part 681c formed integrally with the lower end of the valve shaft 681a to open and close the second valve hole 683a according to ascending and descending of the valve 681. The lower surface of the second valve part 681c is supported by a cam 691 which will be described later so that the valve 681 ascends and descends by force transmitted from the cam 691 through the second valve part 681c. As the valve 681 ascends, the first valve hole 682c is opened and the second valve hole 683a is closed, and as the valve 681 descends, the first valve hole 682 is closed and the second valve hole 683a is opened.

The elastic member 684 is provided with one end supported by the lower surface of a portion of the ascending/descending guide 682 adjacent to the guide hole 682b and the other end supported by the upper surface of the second valve part 681c, and elastically supports the valve 681 in the downward direction.

The two valve drive devices 69 are installed at both sides of the detergent housing 61, and each of the two valve drive devices 69 includes the cam 691 rotated to ascend and descend the valve 681 and a detergent supply motor 692 to rotate the cam 691.

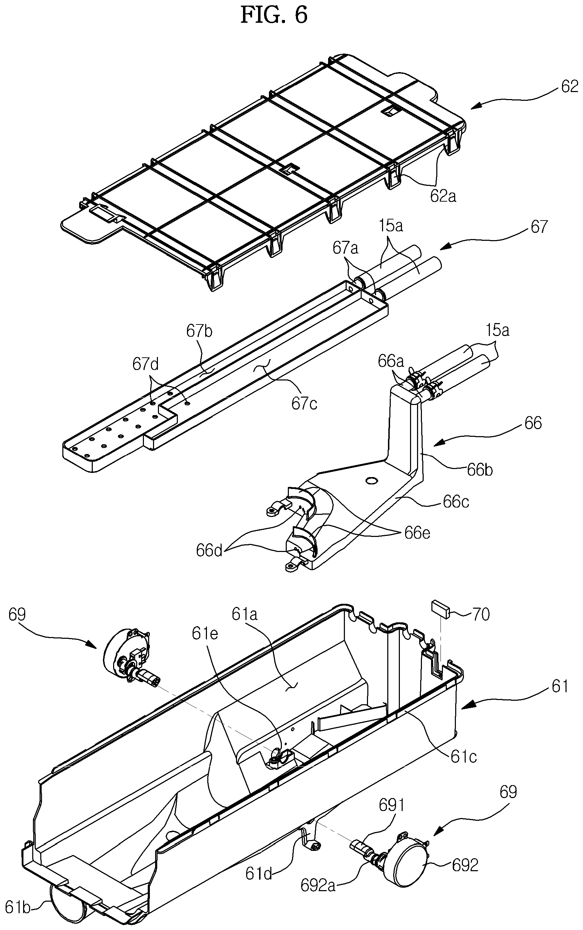

The cam 691 has a fan-shaped cross section and is rotated by the detergent supply motor 692 to ascend and descent the valve 681 based on the rotating angel thereof. The cam 691, as shown in FIG. 6, is disposed under the valve 681 of the detergent accommodation box 63 retracted into the detergent housing 61 within the detergent housing 61, and applies force to the valve 681 through the lower end of the valve 681, i.e., the lower surface of the second valve part 681c.

The detergent supply motor 692 is installed at each of motor installation parts 61d provided at both sides of the lower portion of the detergent housing 61, and a rotary shaft 692a of the detergent supply motor 692 is connected to the cam 691 disposed within the detergent housing 61 through a shaft installation hole 61e provided on the detergent housing 61 and transmits rotary force to the cam 691.

The water supply guides 66 and 67 include an automatic water supply guide 66 connected to the water supply pipes 15a and disposed under the detergent accommodation box 63 retracted into the detergent housing 61, and a manual water supply guide 67 installed on the lower surface of the housing cover 62 and disposed on the accommodation part cover 64 to supply water to the powdery detergent accommodation part 632d and the bleach accommodation part 632e of the manual detergent accommodation parts 632d and 632e.

The automatic water supply guide 66 is configured to guide water to the lower portion of the detergent accommodation box 63 retracted into the detergent housing 61 and to spray water toward the lower ends of the valve units 68 disposed under the detergent accommodation box 63. The automatic water supply guide 66 includes automatic water supply ports 66a provided at the rear end thereof and connected to the water supply pipes 15a, an extension part 66b extended downward to guide water in the downward direction, and a spray part 66c extended forward from the lower end of the extension part 66b and provided with spray holes 66d formed at the front end thereof to spray water toward the lower ends of the valve units 68. Shields 66e disposed in an arc shape around the valve caps 683 to prevent water from being splashed backward are formed on the upper surface of the spray part 66c.

The manual water supply guide 67 includes manual water supply ports 67a provided at the rear end thereof and connected to the water supply pipes 15a, and a powdery detergent water supply channel 67b and a bleach water supply channel 67c, upper surfaces of which are opened. The manual water supply guide 67 is fixed to the lower surface of the housing cover 62 through heat fusion, etc., and thus the upper surfaces of the powdery detergent water supply channel 67b and the bleach water supply channel 67c are closed. Water supply holes 67d to supply water to powdery detergent accommodation part 632d and the bleach accommodation part 632e through the lower surface of the manual water supply guide 67 are provided on the lower surface of the manual water supply guide 67 at positions corresponding to the powdery detergent accommodation part 632d and the bleach accommodation part 632e.

Hereinafter, operation of the above-described detergent supply device of the washing machine will be described with reference to the accompanying drawings.

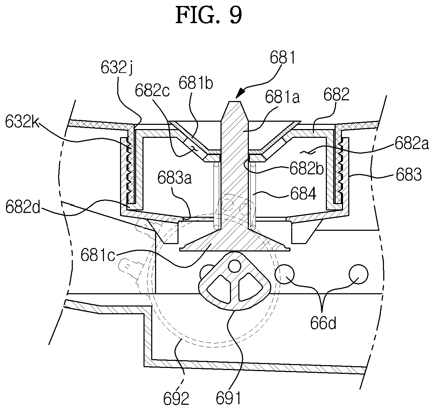

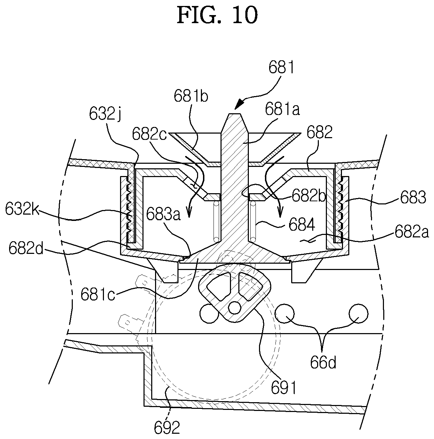

When the cam 691 is rotated by the detergent supply motor 692 under the condition that the first valve hole 682c is closed by the first valve part 681b, as shown in FIG. 9, the valve 681 ascends by the cam 691, as shown in FIG. 10. As the valve 681 ascends, the first valve hole 682c having being closed by the first valve part 681b is opened and the second valve hole 683a is closed by the second valve part 681c. Therefore, a portion of the main detergent or the fabric rinse accommodated in the main detergent accommodation part 632b or the rinse accommodation part 632c is introduced into the temporary storage space 682a provided within the ascending/descending guide 682 through the first valve hole 682c.

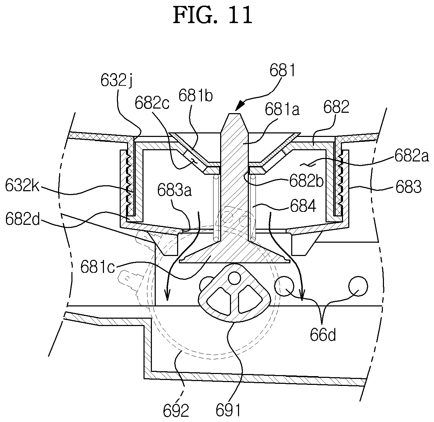

When the cam 691 is rotated again by the detergent supply motor 692 after a designated time has elapsed and then a designated amount of the detergent fills the temporary storage space 682a of the ascending/descending guide 682, the valve 681 having ascent by the cam 691 descends by elastically restoring force of the elastic member 684, as shown in FIG. 11. As the valve 681 descends, the first valve hole 682c is closed by the first valve part 681b and the second valve hole 683a having been closed by the second valve part 681c is opened. Therefore, the detergent filling the temporary storage space 682a of the ascending/descending guide 682 is transmitted to the inside of the detergent housing 61 through the second valve hole 683a.

During the above process of discharging the detergent to the inside of the detergent housing 61 through the second valve hole 683a, the spray holes 66d of the automatic water supply guide 66 spray water. The sprayed water is mixed with the detergent discharged through the second valve hole 683a, and is then supplied to the tub 20 through the water supply hose 15c connected to the detergent housing 61.

Since the spray holes 66d are configured to spray water toward the second valve part 681c of the valve 681, the second valve hole 683a and the cam 691, the second valve part 681c, the second valve hole 683a and the cam 691 are washed by the water sprayed from the spray holes 66d, and thus remaining of the detergent on the second valve part 681c, the second valve hole 683a and the cam 691 is prevented. Therefore, malfunction of the valves 681, generated if the liquid main detergent or fabric rinse remaining on the second valve parts 681c, the second valve holes 683a and the cams 691 is solidified, may be prevented.

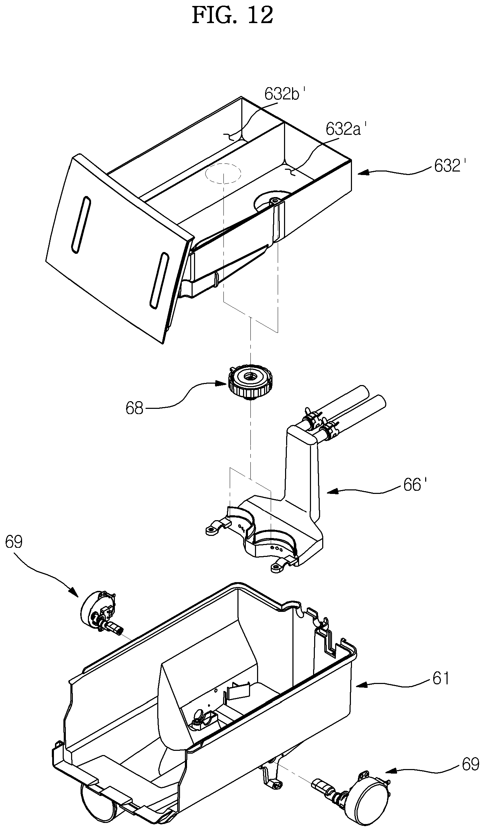

Although an embodiment illustrates the tray 632 as being divided into the main detergent accommodation part 632b, the rinse accommodation part 632c, the powdery detergent accommodation part 632d and the bleach accommodation part 632e to supply the main detergent and the fabric rinse through the automatic detergent supply method and to supply the powdery detergent and the bleach in the manual detergent supply method, the tray is not limited thereto. In accordance with another embodiment, as shown in FIG. 12, the tray 632' may include only a main detergent accommodation part 632a' and a rinse accommodation part 632b' without components corresponding to the powdery detergent accommodation part and the bleach detergent accommodation part, and the detergent supply device 60 includes a pair of valve units 68, a pair of valve drive device 69 and a water supply guide 66' to supply only a main detergent and a fabric rinse through the automatic detergent supply method.

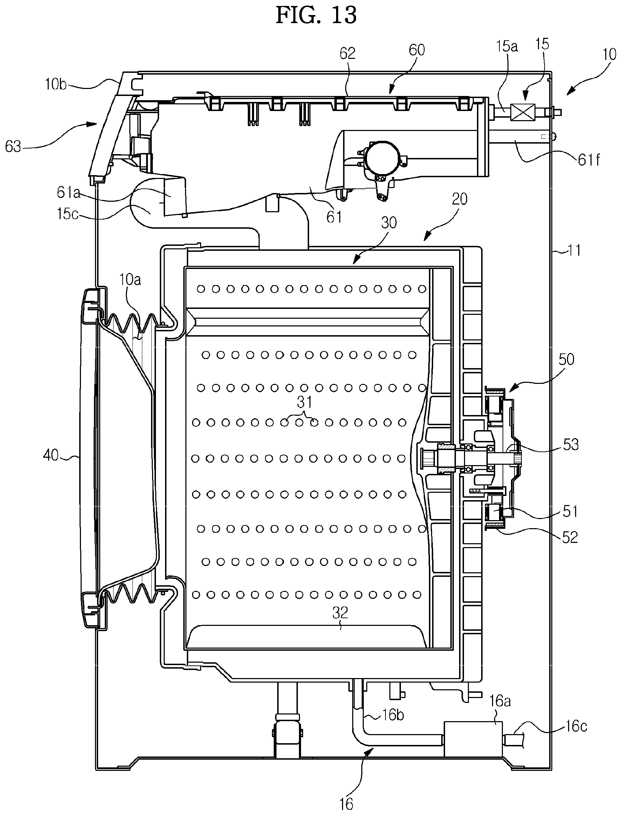

Further, although an embodiment illustrates the rear end of the detergent housing 61 as being supported by the main body frame 11 through the support bar 13 and the support member 17, the detergent housing 61 is not limited thereto. As shown in FIG. 13, the detergent housing 61 may be installed within the main body frame 11 by fixing a coupling part 61f integrally extended from the rear surface of the detergent housing 61 to the rear end of the main body frame 11 through a fastening member, such as a screw.

Hereinafter, operation of the detergent supply device of the above-described washing machine will be described.

First, in order to use a liquid main detergent, a user operates the control panel 14 to execute washing under the condition that the manual supply selection button 14a is not selected. Thereby, the water supply valves 15b are controlled so as to supply water only to the automatic water supply guide 66, and the detergent supply motors 692 are driven to rotate the cams 691. Then, water is sprayed through the spray holes 66d provided at the front end of the automatic water supply guide 66 and a portion of the main detergent accommodated in the main detergent accommodation part 632b is discharged through the second valve hole 683a, simultaneously. The water and the main detergent are mixed within the detergent housing 61, and are then supplied to the tub 20 through the water supply hose 15c.

On the other hand, in order to use a powdery detergent, the user extracts the detergent accommodation box 63 from the detergent housing 61, puts the powdery detergent into the powdery detergent accommodation part 632d through the powdery detergent inlet 64c, and then retracts the detergent accommodation box 63 into the detergent housing 61.

When the user selects the manual supply selection button 14a in the above state and operates the control panel 14 to execute washing, the water supply valves 15b are controlled so as to supply water only to the powdery detergent water supply channel 67b of the manual water supply guide 67. Therefore, water is supplied to the powdery detergent accommodation part 632d through the water supply holes 67d provided on the manual water supply guide 67 and the powdery detergent inlet 64c, is mixed with the powdery detergent accommodated within the powdery detergent accommodation part 632d, and is then supplied to the tub 20 through the water supply hose 15c.

As is apparent from the above description, a washing machine in accordance with an embodiment has a detergent supply device which supplies a detergent through an automatic detergent supply method or a manual detergent supply method according to user's section, thereby using various types of detergent.

Further, the washing machine removes a liquid detergent remaining on valves by spraying water toward the valves through an automatic water supply guide, thereby preventing malfunction of the valves generated when the liquid detergent remaining on valve units is dried and solidified.

Although a few embodiments have been shown and described, it would be appreciated by those skilled in the art that changes may be made in these embodiments without departing from the principles of the invention, the scope of which is defined in the claims.

## Claims

1. A washing machine comprising:
a main body (10);
a tub (20) disposed within the main body (10) to contain water;
a drum (30) rotatably installed within the tub (20); and
a detergent supply device (60) to supply detergents together with water to the tub (20),
wherein the detergent supply device (60) includes
a detergent housing (61) installed within the main body (10)
a housing cover (62) installed to cover the upper portion of the detergent housing (61);
and
a detergent accommodation box (63) movably installed within the detergent housing (61), wherein the detergent accommodation box (63) is divided into automatic detergent accommodation parts (632b) to accommodate a detergent to be supplied automatically and manual detergent accommodation parts (632d) to accommodate a detergent to be supplied manually, and
the detergent supply device (60) supplies the detergents through an automatic detergent supply method and a manual detergent supply method; and
**characterized in that**
the automatic detergent accommodation parts (632b) accommodate a liquid detergent and include detergent discharge parts (632k) provided with detergent discharge holes (632j) to discharge the detergent; and
the detergent supply device (60) further includes valve units (68) disposed at the detergent discharge parts (632k) to selectively discharge the liquid detergent through the detergent discharge holes (632j) and valve drive devices (69) to operate the valve units (68).

2. The washing machine according to claim 1, wherein the automatic detergent accommodation parts (632b) include a main detergent accommodation part (632b) to accommodate a liquid main detergent and a rinse accommodation part (632c) to accommodate a fabric rinse, and
wherein the detergent supply device (60) further includes:
an accommodation part cover (64) covering the main detergent accommodation part (632b) and the rinse accommodation part (632c) and provided with a main detergent inlet (64a) and a rinse inlet (64b) formed at the front end thereof so that the main detergent and the fabric rinse are put into the main detergent accommodation part (632b) and the rinse accommodation part (632c) through the main detergent inlet (64a) and the rinse inlet (64b); and
a rotating cover (65) rotatably installed on the accommodation part cover (64) and rotated to open and close the main detergent inlet (64a) and the rinse inlet (64b).

3. The washing machine according to claim 1, wherein the manual detergent accommodation parts (632d) include a powdery detergent accommodation part (632d) to accommodate a powdery detergent and a bleach accommodation part (632e) to accommodate a bleach, and
wherein the detergent supply device (60) further includes an accommodation part cover (64) covering the automatic detergent accommodation parts (632b);
the accommodation cover (64) includes a powdery detergent inlet (64c) to inject the powdery detergent into the powdery detergent accommodation part (632d) therethrough and a bleach inlet (64d) to inject the bleach into the bleach accommodation part (632e) therethrough; and
water supply holes (67d) are provided on the lower surfaces of a powdery detergent water supply channel (67b) and a bleach water supply channel (67c) at positions corresponding to the powdery detergent inlet (64c) and the bleach inlet (64d).

4. The washing machine according to claim 1, wherein the automatic detergent accommodation parts (632b) include a main detergent accommodation part (632b) to accommodate a liquid main detergent and a rinse accommodation part (632c) to accommodate a fabric rinse, and
wherein the detergent accommodation box (63) includes a front cover (631) forming the front surface thereof, and a tray (632) installed at the rear of the front cover (631) and provided with the main detergent accommodation part (632b) and the rinse accommodation part (632c); and
the front cover (631) includes display windows (631b, 631c) enabling a user to observe the heights of the main detergent and the fabric rinse accommodated in the main detergent accommodation part (632b) and the rinse accommodation part (632c).

5. The washing machine according to claim 1, further comprising:
a control panel (14) arranged at an upper portion of a front surface of the main body (10), the control panel (14) including a manual supply selection button (14a), wherein the manual supply selection button (14a) is configured to select one of the detergent supply methods.

6. The washing machine according to claim 1, wherein each of the valve drive devices (69) includes a cam (691) having a fan-shaped cross section and rotated to operate each of the valve units (68) and a detergent supply motor (692) to rotate the cam (691).

7. The washing machine according to claim 6, wherein each of the valve units (68) includes a valve (681) ascending and descending according to rotation of the cam (691), an ascending/descending guide (682) supporting the valve (681) to ascend and descend the valve (681), and a valve cap (683) installed at each of the detergent discharge parts (632k) to install the ascending/descending guide (682) on each of the detergent discharge parts (632k).

8. The washing machine according to claim 6, wherein:
the detergent supply device (60) further includes an automatic water supply guide (66) to guide water to the lower portions of the valve units (68); and
spray holes (66d) to spray water toward the lower portions of the valve units (68) and the cams (691) are provided at the front end of the automatic water supply guide (66) disposed below the valve units (68).

9. The washing machine according to claim 4, wherein the tray (632) includes:
transmission parts (632f, 632g) provided at positions corresponding to the display windows (631b, 631c); and
detergent guide grooves (632k, 632i) provided on the lower surfaces of the main detergent accommodation part (632b) and the rinse accommodation part (632c), provided with lower surfaces extended to have heights corresponding to the lowest portions of the lower surfaces of the main detergent accommodation part (632b)and the rinse accommodation part (632c), and connected to the lower portions of the transmission parts (632f, 632g).

10. The washing machine according to claim 3, wherein the accommodation part cover (64) further includes an inclined guide (64e) which is downward inclined toward the bleach inlet (64d) and formed adjacent to the bleach inlet (64d).

## Patentansprüche

1. Waschmaschine, mit:
einem Hauptteil (10);
einem Behälter (20), der in dem Hauptteil (10) zur Aufnahme von Wasser angeordnet ist;
einer Trommel (30), die in dem Behälter (20) drehbar montiert ist; und
einer Waschmittelzuführeinrichtung (60) zum Zuführen von Waschmittel zusammen mit Wasser zu dem Behälter (20), wobei die Waschmittelzuführeinrichtung (60) aufweist ein Waschmittelgehäuse (61), das in dem Hauptteil (10) montiert ist,
eine Gehäuseabdeckung (62), die zum Abdecken des oberen Bereichs des Waschmittelgehäuses (61) montiert ist; und
einen Waschmittelaufnahmebehälter (63), der beweglich in dem Waschmittelgehäuse (61) montiert ist, wobei der Waschmittelaufnahmebehälter (63) in automatische Waschmittelaufnahmeteile (632b) zur Aufnahme automatisch zuzuführender Waschmittel, und in manuelle Waschmittelaufnahmeteile (632d) zur Aufnahme manuell zuzuführender Waschmittel unterteilt ist, und
die Waschmittelzuführeinrichtung (60) das Waschmittel mittels eines automatischen Waschmittelzuführverfahrens und eines manuellen Waschmittelzuführverfahrens zuführt;
**dadurch gekennzeichnet, dass**
die automatischen Waschmittelaufnahmeteile (632b) ein flüssiges Waschmittel aufnehmen und Waschmittelableitteile (632k) aufweisen, die mit Waschmittelableitbohrungen (632j) zum Ableiten des Waschmittels versehen sind; und
die Waschmittelzuführeinrichtung (60) ferner Ventileinheiten (68), die an den Waschmittelableitteilen (632k) vorgesehen sind, um selektiv das flüssige Waschmittel durch die Waschmittelableitbohrungen (632j) abzuleiten, und Ventilansteuereinrichtungen (69) aufweist, um die Ventileinheiten (68) anzusteuern.

2. Waschmaschine nach Anspruch 1, wobei die automatischen Waschmittelaufnahmeteile (632b) ein Hauptwaschmittelaufnahmeteil (632b) zur Aufnahme eines flüssigen Hauptwaschmittels, und ein Spülaufnahmeteil (632c) zur Aufnahme ein Spülmittels beinhalten, und
wobei die Waschmittelzuführeinrichtung (60) ferner aufweist:
eine Aufnahmeteilabdeckung (64), die das Hauptspülmittelaufnahmeteil (632b) und das Spülaufnahmeteil (632c) abdeckt und mit einem Hauptwaschmitteleinlass (64a) und einem Spüleinlass (64b) versehen ist, die im vorderen Ende ausgebildet sind derart, dass das Hauptwaschmittel und die Spülung in das Hauptwaschmittelaufnahmeteil (632b) und das Spülaufnahmeteil (632c) über den Hauptwaschmitteleinlass (64a) und den Spüleinlass (64b) eingeführt werden; und
eine Drehabdeckung (65), die auf der Aufnahmeteilabdeckung (64) drehbar montiert ist und durch Drehung den Hauptwaschmitteleinlass (64a) und den Spüleinlass (64b) öffnet und schließt.

3. Waschmaschine nach Anspruch 1, wobei die manuellen Spülmittelaufnahmeteile (632d) ein Pulverwaschmittelaufnahmeteil (632d) zur Aufnahme eines Waschmittelpulvers und ein Bleichmittelaufnahmeteil (632e) umfassen, um ein Bleichmittel aufzunehmen, und
wobei die Waschmittelzuführeinrichtung (60) ferner eine Aufnahmeteilabdeckung (64) aufweist, die die automatischen Waschmittelaufnahmeteile (632b) abdeckt;
die Aufnahmeabdeckung (64) einen Waschpulvereinlass (64c) zum Einführen des Waschpulvers in das Waschpulveraufnahmeteil (632d) und einen Bleichmitteleinlass (64d) zum Einführen des Bleichmittels in das Bleichmittelaufnahmeteil (632e) aufweist; und
Wasserzuführöffnungen (67d) an den unteren Flächen eines Waschpulverwasserzuführkanals (67b) und eines Bleichmittelwasserzuführkanals (67c) an Positionen, die dem Waschpulvereinlass (64c) und dem Bleichmitteleinlass (64d) entsprechen, vorgesehen sind.

4. Waschmaschine nach Anspruch 1, wobei die automatischen Waschmittelaufnahmeteile (632b) ein Hauptwaschmittelaufnahmeteil (632b) zum Aufnehmen eines flüssigen Hauptwaschmittels und ein Spülaufnahmeteil (632c) zur Aufnahme einer Spülung aufweisen, und
wobei der Waschmittelaufnahmebehälter (63) eine Frontabdeckung (631), die eine vordere Oberfläche davon bildet, und eine Ablage (632) an dem hinteren Bereich der Frontabdeckung (631) aufweist und mit dem Hauptwaschmittelaufnahmeteil (632b) und dem Spülaufnahmeteil (632c) versehen ist; und
die Frontabdeckung (631) Anzeigefenster (631b, 631c) aufweist, die es einem Benutzer ermöglichen, die Höhe des Hauptwaschmittels und der Spülung, die in dem Hauptwaschmittelaufnahmeteil (632b) und dem Spülaufnahmeteil (632c) enthalten sind, zu beobachten.

5. Waschmaschine nach Anspruch 1, die ferner aufweist:
eine Steuertafel (14), die an einem oberen Bereich einer Vorderfläche des Hauptteils (10) angeordnet ist, wobei die Steuertafel (14) einen manuellen Zuführauswahlknopf (14a) aufweist, wobei der manuelle Zuführauswahlknopf (14a) ausgebildet ist, eines der Waschmittelzuführverfahren auszuwählen.

6. Waschmaschine nach Anspruch 1, wobei die Ventilansteuereinrichtungen (69) jeweils eine Nocke (691) mit einem fächerförmigen Querschnitt, die zum Betätigen jeder der Ventileinheiten (68) drehbar ist, und einen Waschmittelzuführmotor (692) aufweisen, um die Nocke (691) in Drehung zu versetzen.

7. Waschmaschine nach Anspruch 6, wobei die Ventileinheiten (68) jeweils ein Ventil (681), das gemäß der Drehung der Nocke (691) ansteigt oder absinkt, eine Anstiegs/Abstiegsführung (682), die das Ventil (681) zum Anheben und Absenken des Ventils (681) hält, und eine Ventilkappe (683) aufweisen, die an jedem der Waschmittelableitteile (632k) montiert ist, um die Anstiegs/Abstiegsführung (682) auf jedem der Waschmittelableitteile (632k) zu montieren.

8. Waschmaschine nach Anspruch 6, wobei:
die Waschmittelzuführeinrichtung (60) ferner eine automatische Wasserzuführführung (66) zum Führen von Wasser zu den unteren Bereichen der Ventileinheiten (68) aufweist; und
Sprühlöcher (66d) vorgesehen sind, um Wasser in Richtung zu den unteren Bereichen der Ventileinheiten (68) zu sprühen, und wobei die Nocken (691) an dem vorderen Ende der automatischen Wasserzuführführung (66), das unter den Ventileinheiten (68) angeordnet ist, vorgesehen sind.

9. Waschmaschine nach Anspruch 4, wobei die Ablage (632) aufweist:
Übertragungsteile (632f, 632g), die an Positionen vorgesehen sind, die den Anzeigefenstern (631b, 631c) entsprechen; und
Waschmittelführungsnuten (632k, 632i), die an den unteren Flächen des Hauptwaschmittelaufnahmeteiles (632b) und des Spülaufnahmeteils (632c) vorgesehen sind, mit unteren Flächen versehen sind, die derart erweitert sind, dass sie Höhen haben, die den untersten Bereichen der unteren Flächen des Hauptwaschmittelaufnahmeteils (632b) und des Spülaufnahmeteils (632c) entsprechen, und mit den unteren Bereichen der Übertragungsteile (632f, 632g) verbunden sind.

10. Waschmaschine nach Anspruch 3, wobei die Aufnahmeteilabdeckung (64) ferner eine geneigte Führung (64e) aufweist, die zu dem Bleichmitteleinlass (64d) nach unten geneigt und benachbart zu dem Bleichmitteleinlass (64d) ausgebildet ist.

## Revendications

1. Machine à laver comprenant:
un corps principal (10);
une cuve (20) disposée dans le corps principal (10) pour contenir de l'eau;
un tambour (30) installé de manière rotative dans la cuve (20); et
un dispositif d'alimentation en détergent (60) pour injecter des détergents
avec de l'eau dans la cuve (20),
le dispositif d'alimentation en détergent (60) comprenant:
un compartiment de détergent (61) installé dans le corps principal (10)
un capot de compartiment (62) installé pour recouvrir la partie supérieure du
compartiment de détergent (61); et
une boîte de stockage de détergent (63) installée de manière mobile dans le compartiment de détergent (61), la boîte de stockage de détergent (63) étant divisée en parties de stockage automatique de détergent (632b) pour recevoir un détergent devant être fourni automatiquement et des parties de stockage de détergent manuel (632d) pour contenir un détergent à injecter manuellement, et
le dispositif d'alimentation en détergent (60) injecte les détergents au moyen d'un procédé d'alimentation automatique en détergent et d'un procédé d'alimentation manuelle en détergent; et
**caractérisé en ce que**
les parties de stockage automatique de détergent (632b) logent un détergent liquide et comprennent des parties de décharge de détergent (632k) munies d'orifices de décharge de détergent (632j) pour décharger le détergent; et
le dispositif d'alimentation en détergent (60) comprend en outre des unités de soupape (68) disposées au niveau des parties d'évacuation de détergent (632k) pour évacuer sélectivement le détergent liquide à travers les orifices d'évacuation de détergent (632j) et des dispositifs d'entraînement de soupape (69) pour actionner les unités de soupape (68).

2. Machine à laver selon la revendication 1, dans laquelle les parties de stockage de détergent automatique (632b) comprennent une partie de stockage de détergent principal (632b) pour loger un détergent principal liquide et une partie de stockage de rinçage (632c) pour loger un produit de rinçage de tissu, et
dans lequel le dispositif d'alimentation en détergent (60) comprend en outre:
un capot de partie de stockage (64) couvrant la partie principale de stockage de détergent (632b) et la partie de stockage de rinçage (632c) et muni d'une entrée principale de détergent (64a) et une entrée de rinçage (64b) formée à son extrémité avant de sorte que le détergent principal et le produit de rinçage de tissu soient placés dans la partie de stockage de détergent principale (632b) et la partie de stockage de rinçage (632c) à travers l'entrée de détergent principale (64a) et l'entrée de rinçage (64b); et
un capot rotatif (65) installé de manière rotative sur le capot de la partie de stockage (64) et mis en rotation pour ouvrir et fermer l'entrée principale de détergent (64a) et l'entrée de rinçage (64b).

3. Machine à laver selon la revendication 1, dans laquelle les parties de stockage de détergent manuel (632d) comprennent une partie de stockage de détergent en poudre (632d) pour recevoir un détergent en poudre et une partie de stockage d'eau de Javel (632e) pour recevoir de l'eau de Javel, et
dans lequel le dispositif d'alimentation en détergent (60) comprend en outre un capot de partie de stockage (64) recouvrant les parties de stockage automatique de détergent (632b);
le capot de stockage (64) comprend une entrée de détergent en poudre (64c) pour injecter le détergent en poudre dans la partie de stockage de détergent en poudre (632d) et une entrée d'eau de Javel (64d) pour injecter de l'eau de Javel dans la partie de stockage d'eau de Javel (632e) à travers celle-ci; et
des trous d'alimentation en eau (67d) sont prévus sur les surfaces inférieures d'un canal d'alimentation en eau pour détergent en poudre (67b) et d'un canal d'alimentation en eau de Javel (67c) à des positions correspondant à l'entrée de détergent en poudre (64c) et à l'entrée de l'eau de Javel (64d).

4. Machine à laver selon la revendication 1, dans laquelle les parties de stockage de détergent automatique (632b) comprennent une partie de stockage de détergent principal (632b) pour loger un détergent principal liquide et une partie de stockage de rinçage (632c) pour loger un produit de rinçage de tissu, et
dans lequel la boîte de stockage de détergent (63) comprend un capot avant (631) formant sa surface avant, et un plateau (632) installé à l'arrière du capot avant (631) et pourvu de la partie principale de stockage de détergent (632b) et de la partie de stockage de produit de rinçage (632c); et
le capot avant (631) comprend des fenêtres d'affichage (631b, 631c) permettant à un utilisateur d'observer les niveaux du détergent principal et du produit de rinçage de tissu logés dans la partie principale de stockage de détergent (632b) et la partie de stockage de produit de rinçage (632c).

5. Machine à laver selon la revendication 1, comprenant en outre:
un panneau de commande (14) agencé au niveau d'une partie supérieure d'une surface avant du corps principal (10), le panneau de commande (14) comprenant un bouton de sélection d'alimentation manuelle (14a), le bouton de sélection d'alimentation manuelle (14a) étant configuré sélectionner l'un des produits d'alimentation en détergent.

6. Machine à laver selon la revendication 1, dans laquelle chacun des dispositifs d'attaque de soupape (69) comprend une came (691) ayant une section transversale en forme d'éventail et tournant pour actionner chacune des unités de soupape (68) et un moteur d'alimentation en détergent (692) pour faire tourner la came (691).

7. Machine à laver selon la revendication 6, dans laquelle chacune des unités de soupape (68) comprend une soupape (681) montante et descendante en fonction de la rotation de la came (691), une guide montant/descendant (682) supportant la soupape (681) pour faire monter et descendre la valve (681), et un capuchon de soupape (683) installé sur chacune des pièces de décharge de détergent (632k) pour installer le guide montant/descendant (682) sur chacune des parties d'évacuation de détergent (632k).

8. Machine à laver selon la revendication 6, dans laquelle:
le dispositif d'alimentation en détergent (60) comprend en outre un guide d'alimentation en eau automatique (66) pour guider l'eau vers les parties inférieures des unités de soupape (68); et
des trous de pulvérisation (66d) destinés à pulvériser de l'eau vers les parties inférieures des unités de soupape (68) et les cames (691) sont prévues à l'extrémité avant du guide d'alimentation automatique en eau (66) disposé en dessous des unités de soupape (68).

9. Machine à laver selon la revendication 4, dans laquelle le plateau (632) comprend:
des éléments de transmission (632f, 632g) prévus aux positions correspondant aux fenêtres d'affichage (631b, 631c); et
des rainures de guidage de détergent (632k, 632i) prévues sur les surfaces inférieures de la partie principale de stockage de détergent (632b) et de la partie de stockage de rinçage (632c), pourvues de surfaces inférieures étendues pour avoir des niveaux correspondant aux parties les plus basses des surfaces inférieures de la partie principale de stockage de détergent (632b) et la partie de stockage de rinçage (632c), et connectées aux parties inférieures des parties de transmission (632f, 632g).

10. Machine à laver selon la revendication 3, dans laquelle le capot de la partie de stockage (64) comprend en outre un guide incliné (64e) qui est incliné vers le bas en direction du entrée d'eau de Javel (64d) et formé de manière adjacente à l'entrée d'eau de Javel (64d).
